# EUROPEAN PATENT SPECIFICATION

(11) **EP 3 258 648 B1**
(45) Date of publication and mention of the grant of the patent: **05.08.2020**
(21) Application number: 16174583.1
(22) Date of filing: 15.06.2016
(51) Int. Cl.: H04L 12/28, G08C 17/02, H05B 47/19

(54) **DOWNLOADING PRESETS TO NODES OF A BUILDING AUTOMATION SYSTEM**
HERUNTERLADEN VON VORGABEN ZU KNOTEN EINES GEBÄUDEAUTOMATISIERUNGSSYSTEMS
TÉLÉCHARGER DES PRÉRÉGLAGES VERS DES NOEUDS D'UN SYSTÈME D'AUTOMATISATION DE BÂTIMENT

(43) Date of publication of application: 20.12.2017
(73) Proprietor: Helvar Oy Ab, 02150 Espoo (FI)
(72) Inventor: Van Tromp, Nick, DARTFORD, Kent DA2 7SY (GB)
(74) Representative: Berggren Oy, Helsinki & Oulu

(56) References cited:
- US-A1- 2003 040 813
- US-A1- 2007 061 020
- US-A1- 2011 208 359
- US-A1- 2015 253 748

## Description

### FIELD OF THE INVENTION

The invention relates to controlling the devices that form a lighting system or a building automation system. In particular the invention relates to basic programming in which presets can be downloaded from a control unit to one or more controllable nodes.

### BACKGROUND OF THE INVENTION

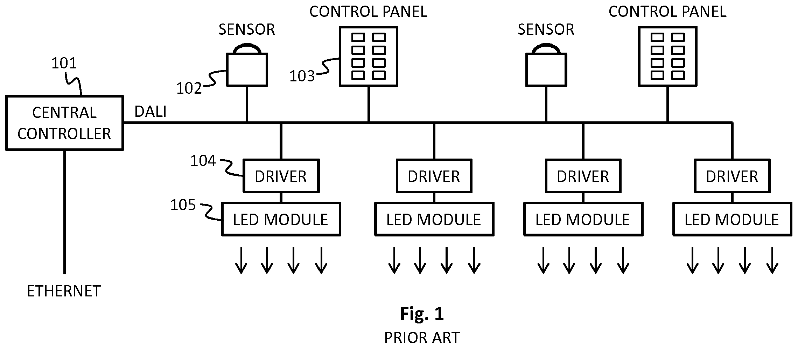

Programmable building automation systems allow adapting the daily environment of users to their varying needs. A lighting control system is considered as an example of a building automation system. Fig. 1 illustrates a known lighting control system, in which a wired control bus (here: a DALI bus; Digital Addressable Lighting Interface, IEC 60929 and IEC 62386) connects a central controller 101 and a number of devices such as sensors 102, control panels 103, and luminaires or lighting fixtures. A typical luminaire comprises an operating device or driver 104 and a light source such as a LED module 105. The operating power lines, such as mains AC lines, have been omitted in fig. 1 to keep the graphical representation simple. A single central controller 101 may have one or more DALI buses under its control. External communications connections like Ethernet or WLAN connections may link the central controller 101 to a remote controlling station. Any or all of the central controller 101, sensors 102, control panels 103, and drivers 104 may include programmable functions.

Also so-called standalone systems are known, in particular when the controlled lighting and/or other effects concern only one room or an otherwise restricted environment. A standalone system may comprise for example one control panel, possibly one sensor, and one or more luminaires that only need the operating power lines as well as the local communication connections for transmitting the control commands within that environment.

While programmability is advantageous in terms of adaptability, it may involve the drawback that without a properly functioning program the system may be of little use. As an example when a new building is constructed or a new lighting system is installed, before the luminaires have been programmed to recognize the appropriate control commands it may be difficult to switch the lights on even for testing them or for providing light for the ongoing installation work. Difficulties in initial testing may become more complicated in lighting systems where not only basic switching on and off is desired but the lighting should be controllable in a more versatile way, like providing light of different colours or colour temperatures.

A prior art document US 2007/0061020 discloses a home automation protocol system that provides a network consisting of a number of node devices, controllers, and servers for storing information about the node device settings and scene settings in a home environment.

Further in related art, US 2003/040813 A1 discloses a method and apparatus for providing distributed control of a home automation system. Each device participating in a home automation system is equipped with control logic for providing distributed control. Through the control logic, each device maintains scene definitions describing the state of the device for each scene in which it participates. When any device in the system receives a request to launch a scene, such as a button press on one of the devices, the device broadcasts a scene state change message to all devices within the home automation system. The scene state change message identifies to each device a particular scene that should be launched. Each device in the system receives the message and determines whether the device is a participant in the scene. If the device is a participant in the scene, the device adjusts its state according to a scene definition stored in the device associated with the scene. The device may adjust a controlled electrical load, such as a light, according to the scene definition by turning the load on, off, or setting the load to some intermediate value.

### SUMMARY OF THE INVENTION

The present invention is defined in the appended independent claims to which reference should be made. Advantageous features are set out in the appended dependent claims.

It is an objective of the present invention to provide devices and methods for initiating the operation of a control unit and associated controlled devices in a building automation system easily and intuitively. Another objective of the invention is to ensure that the ease and intuitiveness of the process are not compromised even if multiple different user-actuatable input means are available for selection. A further objective of the invention is to enable easy, intuitive, and secure coupling of a newly installed control unit with a portable, wireless device that has a user interface. Yet another objective of the invention is to enable initiating the operation of a control unit and associated controlled devices already before the control unit has been fully equipped with its final user interface.

The objects of the invention are achieved with a device to which a selection of alternative fasciae can be connected, so that data for preset downloads matching the user interface of a selected fascia are read from a memory associated with the fascia. Objectives of the invention are also achieved by storing data for fascia-independent preset downloads to a memory of the device.

### BRIEF DESCRIPTION OF THE DRAWINGS

Figure 1 illustrates a known wired building automation system,
figure 2 illustrates a system comprising a rear unit and a fascia,
figure 3 illustrates the division of roles concerning a memory for preset data,
figure 4 illustrates a system of a rear unit, exchangeable fasciae and a portable device,
figure 5 illustrates a method according to an embodiment,
figure 6 illustrates a system in which none of the fasciae is attached to the rear unit,
figure 7 illustrates a method according to another embodiment, and
figure 8 illustrates a method according to another embodiment.

### DETAILED DESCRIPTION

The term control unit can be used generally to refer to a device that enables a user to control how certain features of a building automation system work. Control units of this kind are meant to be within relatively easy access to the users when installed. They should offer a user interface that is intuitive for even a first-time user but simultaneously includes sufficient versatility so that an expert user can fully utilize the capabilities of the building automation system. Typical installation locations for control units of this kind include but are not limited to the walls, doorposts, control stations, and table surfaces available in a constructed environment.

As an example of a control unit of a house automation system we may consider a control panel that allows the user to change at least the intensity and possibly also the colour and/or colour temperature of lighting. At the time of writing this description the control panels of lighting are typically installed in walls, where switch boxes or pattresses are embedded to reserve the appropriate space, to provide the means for mechanical attachment, and to allow wiring through conduits. According to an embodiment of the invention a rear unit of the control unit is designed to fit inside the pattress, while a fascia attached to the rear unit may remain visible and accessible to users.

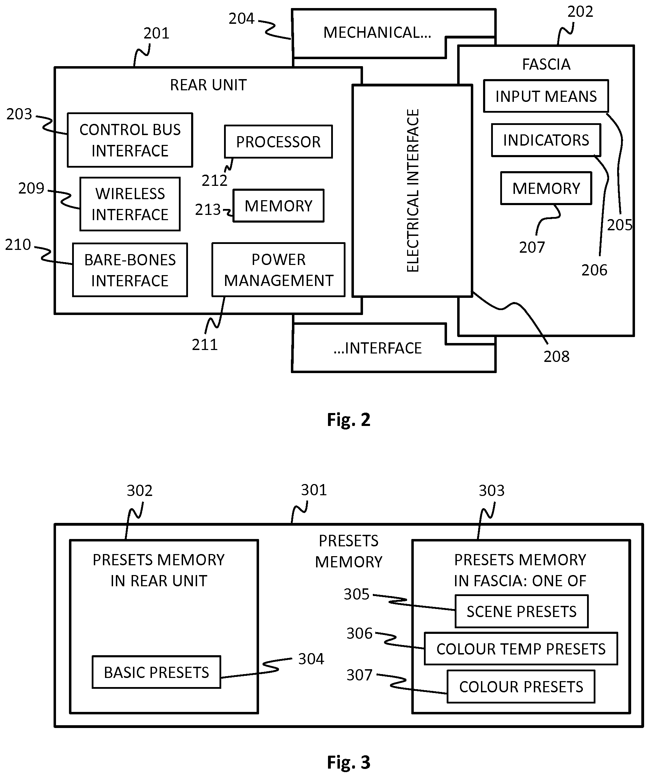

Fig. 2 illustrates schematically a control unit of a building automation system comprising a so-called rear unit 201 and the associated fascia 202. The rear unit 201 comprises a command reception interface for receiving commands from a user. In the embodiment of fig. 2 the command reception interface may involve various portions that operate differently, as will be explained in more detail below. Additionally the rear unit 201 comprises a command transmission interface for transmitting control commands to one or more controllable devices of the building automation system. In the embodiment of fig. 2 the command transmission interface appears in the form of a control bus interface 203 that conforms to a building automation standard such as DALI or DALI 2, for example.

A mechanical interface 204 is provided for receiving the fascia 202, i.e. for mechanically holding the rear unit 201 and the fascia 202 together. The exact form of the mechanical interface 204 is not important to the present invention and it may comprise screws, snap-on attachments, nuts and bolts, rivets, hook-and-loop attachment, glue, tacky surfaces, magnets, and/or the like. It is advantageous but not essential that the mechanical interface 204 allows detaching the fascia 202 from the rear unit 201 later for example for servicing or updating. At the same time it may be advisable to make the mechanical attachment strong enough and possibly conceal the way of detaching so that unauthorized users do not realize that the fascia 202 could be detached and/or do not find any easy way to detach the fascia 202.

The fascia 202 is meant to be the (only) part that is visible and accessible to normal users during normal use. Therefore it is natural that the fascia 202 comprises some input means 205, like switches, keys, sliders, knobs, touch-sensitive areas, acoustic sensors, movement sensors, optical sensors, receivers of oscillating electromagnetic fields, and/or any other means through which the user can give control commands. It may be advantageous to provide the fascia with indicators 206, such as one or more light-emitting diodes, displays, display elements, electromechanical indicators, tactile feedback means, vibrating surface parts, and/or the like in order to enable outputting simple messages and feedback to the user. For the purposes of the present invention it is advantageous to equip the fascia 202 with a memory 207 for storing programmed data that is specific to the fascia. In particular such programmed data may indicate specific functions for the controlling of which that particular fascia contains user-actuatable input means. Examples of such programmed data are explained in more detail later in this description.

An electrical interface 208 is provided between the rear unit 201 and the fascia 202. One purpose of the electrical interface 208 is to enable the rear unit 201 to receive stored data from a fascia 202 that has been received in the mechanical interface 204. The electrical interface 208 may have also other purposes, such as conveying to the rear unit 201 information about how a user manipulated the input means 205, and providing the attached fascia 202 with operating voltage(s) from the rear unit 201. If the electrical interface 208 comprises an electromechanical connector, it is possible to utilize some properties of such a connector also for mechanical purposes such as aligning, attachment, and mechanical support. Thus the separation into a mechanical interface 204 and an electrical interface 208 may be logical rather than physical. The electrical interface 208 is not necessarily wired, but can encompass at least partly wireless communications. However, in a typical case the mechanical interface 204 maintains the rear unit 201 and the fascia 202 so close to each other that making a galvanic connection may be the most convenient and most reliable choice.

Previously it was indicated that the command reception interface of the rear unit 201 may comprise various portions that operate differently. One such portion may utilize the electrical interface 208 so that control commands that a user gives through the input means 205 of the fascia 202 are conveyed to the rear unit 201 in the form of electrical signals. The electrical interface 208 may also be utilized so that the rear unit 201 uses electrical signals to instruct the fascia 202 about which indicators 206 should be activated. In other words the fascia 202 may act as a user interface for the rear unit 201, and portions of the rear unit 201 that take part in the exchange of electrical signals with the fascia 202 through the electrical interface 208 may constitute a part of the command reception interface of the rear unit 201.

The rear unit 201 may comprise a wireless interface 209 for setting up and maintaining wireless communications with other devices than the fascia 202. The wireless interface 209 may comprise for example a Bluetooth, Bluetooth Low Energy, Zigbee, Near Field Communication, RFID, IrDA, WLAN, and/or EnOcean interface. Its range of communications is most advantageously sufficiently long so that it covers that environment in which those properties of the building automation system can be experienced that can be controlled through the control unit. For example if the control panel of a lighting system is considered as a control unit, the range of communications of the wireless interface 209 should cover that room or those rooms the lighting of which can be controlled with said control panel. It is also possible that the wireless interface 209 comprises a short-distance portion, such as a Near Field Communication part, and a longer range portion such as a Bluetooth portion.

The rear unit 201 may also comprise a so-called bare-bones interface 210, which comprises input means through which the user can give control commands even when the fascia 202 is not in place. Thus the bare-bones interface 210, if provided, may constitute a part of the command reception interface of the rear unit 201. The bare-bones interface 210 may comprise for example one or more switches or touch-sensitive areas that are located at an outer surface of the rear unit 201. As an example that surface of the rear unit 201 that remains visible and accessible when the rear unit 201 has been installed in a pattress may comprise a capacitively sensitive surface portion or a flexible portion beneath which is a switch that the user can actuate by pressing said flexible portion. Initially said surface of the rear unit 201 that remains visible and accessible when the rear unit 201 has been installed in a pattress may be covered with a protective cover that will be later removed to allow attaching a fascia, and the bare-bones interface 210 may be constructed so that it utilizes parts of such a protective cover or at least works despite said protective cover being still in place. For example, the protective cover may comprise indicia that show, which parts of the surface should be pressed to give control commands. Another example of utilizing parts of a protective cover to implement the bare-bones interface 210 could involve a conductive patch on an inner surface of the protective cover, so that pressing the protective cover at the respective location causes said conductive patch to create a connection between two conductive tracks on the surface of the rear unit proper. If the bare-bones interface 210 comprises user-accessible input means on the surface that will later be covered by the fascia 202, and/or if at least some of such input means are similar in function as in the fascia 202, it may be advantageous to place and design such input means so that their location and appearance resemble the corresponding input means in the fascia 202. For example, if both the bare-bones interface 210 and the fascia 202 exhibit an on/off switch, it can be placed in the middle of the visible surface and designed to look the same in both. This helps the user to perceive the existence and availability of the bare-bones interface 210.

The rear unit 201 comprises one or more processors 212, which designation is here used generally to mean all kinds of programmable circuit elements that are capable of automatically executing machine-readable instructions stored in a memory 213. Most of the tasks and functions of the rear unit 201 that are described here are most advantageously implemented as programmable processes executed by the one or more processors 212.

The concept "preset" is essential for understanding the present invention. A preset is a (typically user-) programmable association between a command that a controllable node of a building automation system may receive from a control unit and the selected action that said controllable node should perform as a response thereto. Presets represent a kind of parameterized shorthand on the command line: when a preset has been stored in the controllable node(s), the control unit does not need to transmit more than a command "execute preset X" to make the controllable node(s) perform all those steps that together constitute the desired action. The letter X is user here to show that an identifier of the preset should appear in the command, at least if there are more than one preset. Contrary to command-action-pairs that are fixedly defined in the building automation standard, the action that should be performed in response to the command to execute a particular preset can be relatively freely selected by the user in the programming phase.

Presets can be stored in a preparatory manner, for example during manufacturing or pre-delivery testing, but they can - and typically should - be made only after installation when a commission engineer or properly authorized user knows, which kind of preprogrammed action serves best the users of that particular system. As an example if a control panel of a lighting system comprises four visible switches, the commission engineer or properly authorized user may program the system so that pressing each switch causes the lighting system to assume a respective setting called a scene, in which each luminaire produces light at the proper intensity and colour belonging to that scene. The programming message or sequence of messages transmitted to one or more controllable nodes of the building automation system to make them store one or more particular presets may be called a preset download. Its form is typically defined in the standard of the building automation system, but its payload content naturally varies according to the exact nature of the preset that is to be stored.

According to an embodiment a control unit of a building automation system may comprise preprogrammed data that it can utilize to prepare and transmit preset downloads of a default kind. The control unit may be configured to respond to a particular command from user by transmitting, through its command transmission interface, one or more preset downloads. A controllable network node that receives such a preset download stores the data contained therein as a preset. As an example if the control unit is a control panel of a lighting system and comprises a number of scene buttons, the default preset download may instruct the receiving luminaires so that scene 1 means lighting intensity at 100%, scene 2 means lighting intensity at 75%, scene 3 means lighting intensity at 50%, and scene 4 means lighting intensity at 25%. The command from user that triggers transmitting the default preset download may be e.g. such a long press of an on/off switch that it would be unlikely to occur without explicit intention by a user who knows what he or she is doing.

Referring back to fig. 2 an assumption behind providing a control unit with exchangeable fasciae 202 is that the rear unit 201 may remain the same while the designer of the lighting system may select the fascia 202 of his or her choice. This allows standardizing the design, manufacturing, and logistics of the rear units, which typically contain most of the functional parts, while simultaneously giving considerable freedom for designing and selecting fasciae of different aesthetical appearance and/or different functions. As an example there is discussed a case in which three functionally different fascia types are provided: a scenes fascia with a number of switches for selecting corresponding scenes; a colour temperature fascia with means for steplessly changing the colour temperature of generally white lighting; and a colour fascia with means for steplessly changing the colour of lighting. The colour temperature fascia and colour fascia may additionally comprise similar scene switches as the scene fascia, and each fascia type may comprise an on/off switch.

The different nature of controlling in each of the cases described above (small number of discrete alternatives; sliding selection on a one-dimensional colour temperature axis; free selection within a two-dimensional colour space) advocates building the different fasciae with significantly different input means. Such an arrangement gives rise to a question: how should one arrange the transmission of preset downloads of default kind in order to serve best the users of different lighting systems?

One approach would be tasking the fascia - and not the rear unit - with transmitting the preset downloads to the one or more controllable nodes of the building automation system. However, such an approach might make the fascia unnecessarily complicated and could even lead to duplicating some circuitry, at least if the rear unit involves the bare-bones interface 210 and allows transmitting preset downloads even in situations where the fascia 202 is not yet in place.

Another approach would be to only allow very basic kinds of presets, so that even if e.g. a colour fascia offered essentially different kinds of input means than a scenes fascia, in each of them only a simple on/off switch was available for preset operation and made the rear unit transmit very simple preset downloads. Such an approach involves the disadvantage of not allowing the use of the concept of presets in a very versatile way.

Fig. 3 illustrates a concept that can be used to implement a versatile preset downloading functionality in a situation of the kind described above. The presets memory 301, which conceptually means all stored data on the basis of which preset downloads can be composed, is logically divided between a first presets memory 302 in the rear unit and a second presets memory 303 in the fascia. The first presets memory 302 may be physically located in the memory 213 shown in fig. 2 and comprise data 304 for basic preset downloads that can be transmitted regardless of which fascia is attached (or even without any fascia attached). The second presets memory 303 may be physically located in the memory 207 shown in fig. 2 and comprise fascia-specific preset data, i.e. data indicating specific functions for the controlling of which that particular fascia contains user-actuatable input means. Fig. 3 illustrates examples of such data: data for default scene presets 305, data for default colour temperature presets 306, and data for default colour presets 307. Typically a fascia of a particular kind would only contain one of these, or at least have only one of these activated and available for a rear unit to which the fascia is attached.

Software executed by the processor(s) 212, the execution of which makes the rear unit 201 transmit default preset downloads to controllable network nodes, may be data driven in the sense that although it is always the same command from user that triggers the transmission of a preset download, the data read from either the first preset memory 302 or the second preset memory 303 determines, what will actually be transmitted.

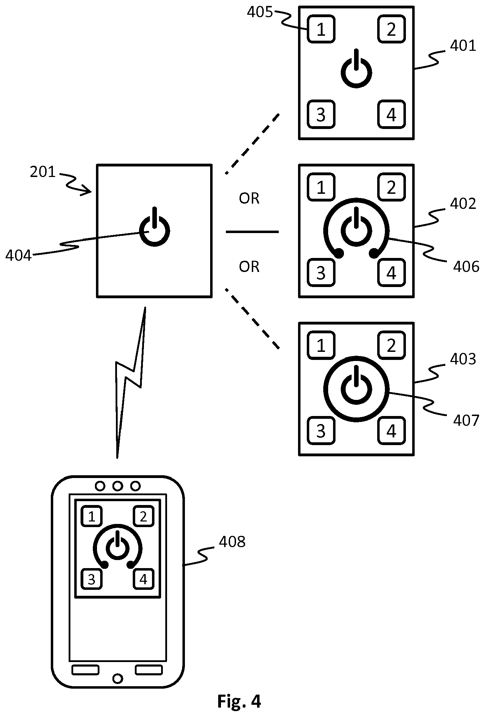

Fig. 4 illustrates schematically a system in which a rear unit 201 may be equipped with any of a scenes fascia 401, a colour temperature fascia 402, or a colour fascia 403. A command reception interface of the rear unit 201 comprises a bare-bones interface, the physical representation of which is the on/off sign 404 at an outer surface of the rear unit 201. The input means of the scenes fascia 401 comprise an on/off switch and four scene selection buttons, of which the first scene selection button 405 is an example. The input means of the colour temperature fascia 402 comprise an on/off switch, four scene selection buttons, and a colour temperature horseshoe 406. The input means of the colour fascia 403 comprise an on/off switch, four scene selection buttons, and a colour wheel 407. The input means shown in fig. 4 are only examples, and the fasciae may comprise additional or different input means: for example, each of the fasciae 401 to 403 may comprise intensity control means in the form of a horseshoe-formed area in the middle. If necessary, a sufficiently versatile fascia may enable toggling between the modes of intensity control, colour control, and/or colour temperature control by touching respective selection areas, and indicate which mode has been selected by illuminating an indicator next to an appropriate symbol. In any case the portions of the rear unit 201 that receive electrical signals from the fasciae 401 to 403 indicative of how a user manipulated the input means constitute a part of the command reception interface of the rear unit 201.

Additionally the command reception interface of the rear unit 201 comprises a wireless portion that the rear unit 201 may use to receive commands from a user through a portable wireless device, such as a smartphone 408. An executable program stored in the program memory of the smartphone 408 comprises machine-readable instructions that, when executed by one or more processors in the smartphone 408, cause the smartphone to execute its part of a method in which it exchanges information with the rear unit 201. An example of such an executable program is the SceneSet app available from Helvar Ltd., Hawley Mill, Hawley Road, Dartford, United Kingdom.

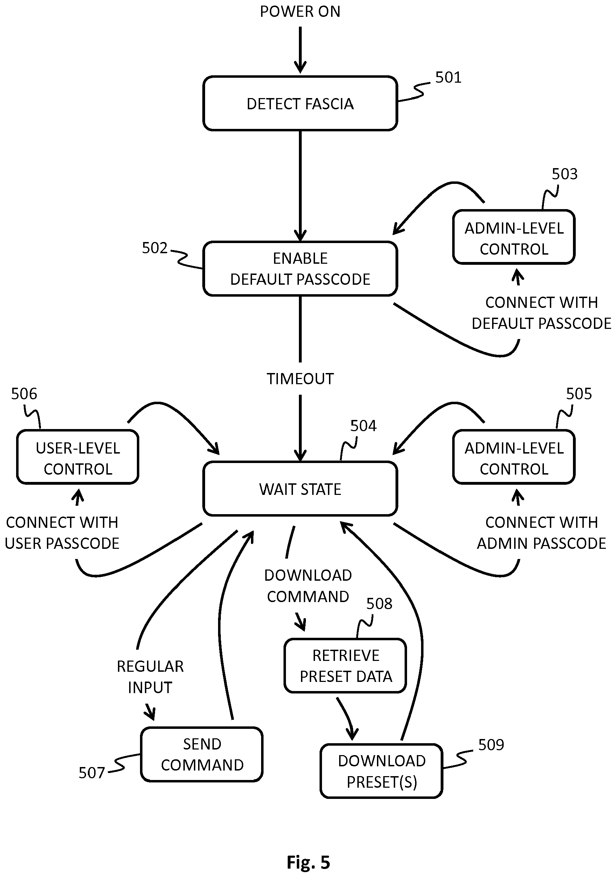

The operation of the devices in a system like that of fig. 4 is described first with reference to fig. 5. When operating power is coupled to the rear unit, it proceeds to detect the attached fascia at step 501. In the following it is assumed that the colour temperature fascia 402 shown in fig. 4 was selected and attached to the rear unit 201. One consequence thereof is that a portable wireless device 408 that has been wirelessly paired with the rear unit 201 can display an image of the attached fascia to the user. This capability may be based on e.g. GTIN codes of the fasciae; the rear unit read the GTIN code of the attached fascia as a part of the detection step 501 and revealed it to the portable wireless device 408 during pairing, and the last-mentioned used its internal database or a communications connection to an external database to retrieve the visual image of the corresponding fascia. Methods and arrangements for making a portable wireless device pick up the identity and outline of a control panel have been described in more detail in the European patent application number 15167916.4 assigned to the same assignor as this text and published as EP3096304.

For a limited period of time after power-up, like two minutes, the rear unit is configured to allow opening a control session with a request message directed to it and containing a default passcode. The request message may come through a wireless part of the command reception interface. In fig. 5 the rear unit goes into state 502 in which it allows nearby portable wireless devices to connect with it using the default passcode. If a connection request containing the appropriate default passcode is received, the rear unit goes into state 503 in which it accepts and reacts to control commands of administrator level from the portable wireless device. Administrator level commands may cover e.g. changing passcodes and performing other such programming actions that change the operation of the system, as compared to user-level commands that allow making fewer and/or less important changes. The purpose of the initial time period after power-up, during which the rear unit accepts the default passcode, is to ensure that commissioning engineers can always connect to a panel, even if a new administrator passcode has been set and to enable reset of passcodes if they are forgotten.

When the initial time period expires the rear unit goes into the wait state 504. In this state it is configured to allow opening control sessions with request messages directed to it, so that actions allowable during such a control session depend on the passcode contained in the request message. If a connection request containing the appropriate administrator level passcode is received, the rear unit goes into state 505 in which it accepts and reacts to control commands of administrator level from the portable wireless device. If a connection request containing the appropriate user level passcode is received, the rear unit goes into state 506 in which it accepts and reacts to control commands of user level from the portable wireless device.

If the user manipulates the input means of the attached fascia in a way that produces a normal input signal, the rear unit transmits the appropriate command through its command transmission interface according to state 507. This last mentioned action occurs also if the user manipulates the user interface of the portable wireless device in a way that causes the transmission of a command comparable to a normal input signal wirelessly to the rear unit. Receiving a particular download command from the user triggers the actions shown as steps 508 and 509 in fig. 5. In step 508 the rear unit retrieves the data to be contained in the preset download. The rear unit may have received the data from the fascia through the electrical interface earlier, e.g. at step 502, in which case it is just retrieved from a local memory in the rear unit at step 508. Another possibility is that the rear unit requests and receives the data from the fascia only when the need arises in step 508. The former practice may enable reacting faster to the received download command, while the latter may help to save memory space because the same data does not need to be held in memory both in the fascia and in the rear unit. The rear unit is most advantageously configure to make the transmission of the one or more preset downloads in broadcast mode in step 509, so that the same preset downloads are received and stored in all devices that are connected to the same control bus and that are configured to accept preset downloads of this kind.

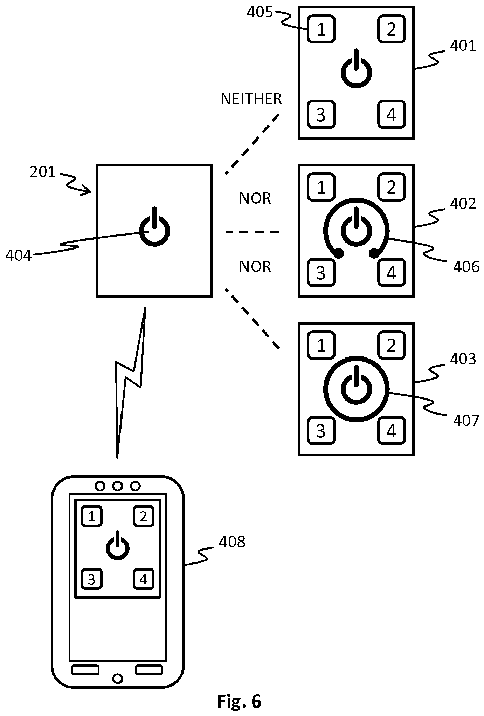

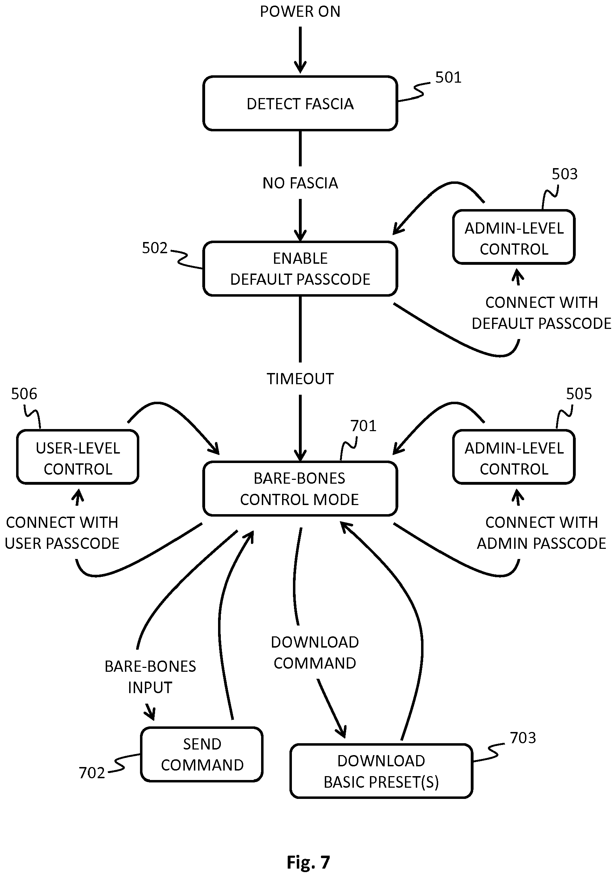

A variation of the procedure explained above is illustrated schematically in figs. 6 and 7. The devices shown in fig. 6 are the same as in fig. 4, but now it is assumed that none of the fasciae 401 to 403 has been attached to the rear unit 201 at the power-up moment of the last-mentioned. Thus the attempt of detecting the fascia at step 501 of fig. 7 results in no fascia being detected by the rear unit. State 502 in fig. 7 represents the limited period of time after power-up during which the rear unit is configured to allow opening a control session with a request message directed to it and containing a default passcode. Thus state 502 and state 503 in which the rear unit accepts and reacts to control commands of administrator level from the portable wireless device are the same as in fig. 5, although the control commands may naturally not be such that the presence of a fascia would be required to respond.

The absence of a fascia does not prevent the rear unit from pairing with portable wireless devices. According to an advantageous embodiment if the pairing process reveals that there is no fascia attached, for example so that the portable wireless device does not receive any GTIN code of a fascia from the rear unit during the pairing process, the executed software makes the portable wireless device display a predefined standard image of a fascia. In fig. 6 it is assumed that the layout of the scenes fascia 401 constitutes such a standard image, so that one is displayed on the display of the portable wireless device 408. An important consequence thereof is that even if the bare-bones interface of the rear unit 201 would only contain a limited set of input means such as the on/off switch 404, the command reception interface of the rear unit 201 may still be configured to receive more versatile commands from the portable wireless device 408, the user of which is offered an intuitive way of giving such commands because what the user sees on the display resembles closely the control panels he or she is used to see.

Pairing with the rear unit that has no attached fascia enables also opening a control session with a request message directed to the rear unit, so that actions allowable during such a control session depend on the passcode contained in the request message. Thus states 506 and 507 appear in fig. 7 in the same way as in fig. 5. The rear unit is configured to respond to a command received through the on/off switch 404 (or other user-actuatable switch that is located at an outer surface of the rear unit and constitutes a part of the bare-bones interface) by transmitting the corresponding commands through its command transmission interface. The user may for example trigger sending on/off commands according to step 702 to all devices of the building automation system that are connected to the same command bus as the rear unit 201 by pressing the on/off switch 404.

If the rear unit 201 receives a download command through some part of its command reception interface (either a user-actuatable switch in the bare-bones interface or wirelessly through the portable wireless device 408), it may transmit one or more preset downloads containing only data read from a memory within the rear unit itself at step 703. In the conceptual layout of fig. 3 such data is retrieved from the first presets memory 302 in the rear unit and it comprises data 304 for basic preset downloads.

Earlier in this description it was noted that the way in which the user gives the download command should be selected so that it would be unlikely to occur accidentally. Considering that any of the alternative fasciae can be attached, or that the rear unit may even appear without any attached fascia and still allow downloading presets, or that the user may trigger downloading the presets even by using a portable wireless device, it is advantageous if the way in which the user gives the download command remains as similar as possible in all these cases. An example of such a way is pressing the on/off switch for a suitable long time, such as ten seconds. The on/off switch is present and similarly located in all of the alternative user interfaces, so the user does not need to remember several different ways of giving the download command.

A scenes fascia 401 may be a good choice for a lighting system in which only the intensity of light is controllable, while selecting a colour temperature fascia 402 or a colour fascia 403 is reasonable only if the colour temperature or colour of the lighting is controllable respectively. If no fascia has been attached, the default presets should be selected so that they have reasonable utility in all kinds of lighting systems. The data that is stored in the different fasciae and in the rear unit for use in the default presets may reflect this difference. A control unit where a scenes fascia 401 is attached or a control unit where no fascia has been attached to the rear unit may download the following default presets:
- scene 1: lights at 100% intensity
- scene 2: lights at 75% intensity
- scene 3: lights at 50% intensity
- scene 4: lights at 25% intensity
- intensity horseshoe (if present): intensity control
- on/off switch: lights on to the level last used / lights off.

It should be noted that even if the bare-bones interface may only offer the on/off switch as a user-actuatable switch, a control unit where no fascia has been attached to the rear unit may still download all the presets mentioned above, because e.g. the scene selection switches may be available in the user interface that a paired portable wireless device offers to the user.

A control unit where a colour temperature fascia 402 is attached may download the following default presets:
- scene 1: 100% intensity, minimum colour temperature
- scene 2: 100% intensity, colour temperature 33% above minimum
- scene 3: 100% intensity, colour temperature 66% above minimum
- scene 4: 100% intensity, maximum colour temperature
- intensity horseshoe (if present): intensity control or colour temperature control
- on/off switch: lights on to the level last used / lights off.

A control unit where a colour fascia 403 is attached may download the following default presets:
- scene 1: white light at 100% intensity
- scene 2: red light at 100% intensity
- scene 3: green light at 100% intensity
- scene 4: blue light at 100% intensity
- intensity horseshoe (if present): intensity, hue, or saturation control
- on/off switch: lights on to the level last used / lights off.

Other default presets are possible, but it is advantageous to select the fascia-specific default presets so that they emphasize specific functions for the controlling of which that particular fascia contains user-actuatable input means.

According to an advantageous embodiment when a portable wireless device has once received from a control unit a GTIN code or other identifier of the attached fascia and retrieved the appropriate layout of that fascia type for displaying it to the user, the portable wireless device continues to display that fascia layout for that control unit even if at a subsequent later time of pairing it would not receive any GTIN code of a fascia from the same control unit. Such a functionality is advantageous, because it maintains the appropriate control possibilities through the portable wireless device even in cases where the original fascia becomes damaged, malfunctions, or gets stolen.

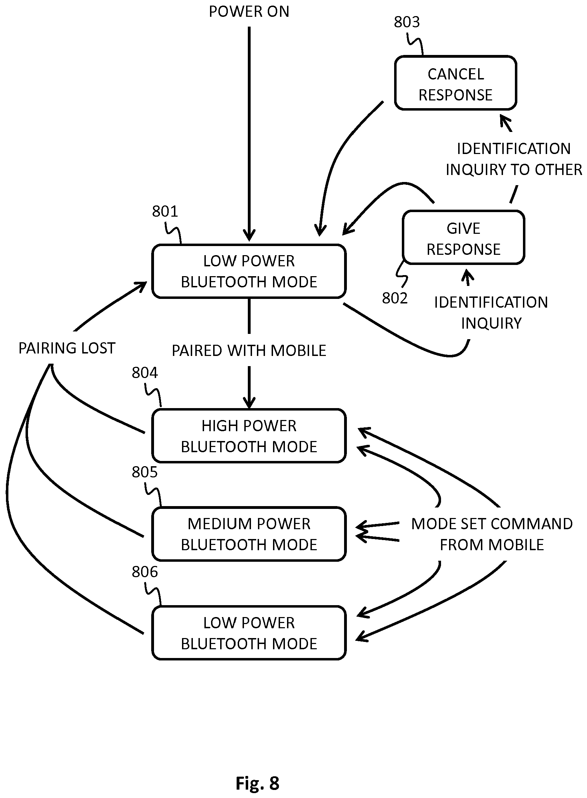

Fig. 8 illustrates an advantageous way of changing between transmission power modes concerning the wireless link between a control unit and a portable wireless device of a user. In fig. 8 it is assumed as an example that the wireless link conforms to the Bluetooth standard, and can operate in low, medium, and high power modes. After power-up the control unit is in the low power mode according to state 801, meaning that the portable wireless device of the user must come relatively close to the control unit to detect it and to initiate pairing. Even without pairing the control unit may respond to an identification inquiry received wirelessly by giving a response, for example by flashing one or more indicator LEDs on a fascia, according to state 802. This is advantageous in a case where a portable wireless device of a user has detected two or more control units and indicated their presence to the user on a display, and the user wants to know, which of them is which. The user may e.g. tap the indicator of one control unit on the display, triggering the wireless transmission of an identification inquiry to that control unit.

Flashing the indicator LEDs or giving other response may continue for a predefined duration of time in state 802, unless the user triggers the wireless transmission of an identification inquiry to another control device in between. The last-mentioned should abruptly end giving any response according to state 803, because it is now the turn of the other control unit to respond.

Pairing with a portable wireless device may cause the control unit to change to high power mode according to state 804, enabling the user to increase the distance to the control unit without losing the possibilities of wireless communications. While the pairing remains in force the user may use the app in the portable wireless device to toggle between the high, medium, and low power modes according to states 804, 805, and 806. Losing the pairing with the portable wireless device should make the control unit assume again the low power mode according to state 803, because in the absence of any portable wireless device to communicate with there is no need to waste energy in higher power transmissions.

Variations to the features described above are possible, and the described embodiments should be construed as examples only. For example, even if a lighting system has been considered as an example of a building automation system, the system may have other or different functions that deal with HVAC, access control, communications, and/or other aspects of building automation. The available selection of fasciae may involve less or more than three alternatives, and the user interfaces offered by and functionalities controllable through the various fasciae may be different than those described above. The default presets to be downloaded may additionally depend on other factors like the time, day, location, or current environmental conditions. Instead of making the transmission of the preset downloads in broadcast mode the control unit may transmit one or more preset downloads in addressed mode to only some of the devices coupled to the same control bus.

## Claims

1. A device (201) for controlling a building automation system, the device comprising:
- a command reception interface for receiving commands from a user,
- a command transmission interface (203) for transmitting control commands to one or more controllable nodes of said building automation system, and
- a mechanical interface (204) for receiving a fascia (202);
- an electrical interface (208) for receiving stored data from a fascia (202) received in said mechanical interface (204), and
- said device (201) is configured to respond to a download command received from user by transmitting - through said command transmission interface (203) - one or more preset downloads containing data received from said fascia (202) through said electrical interface (208), wherein a preset download defines a respective action that a controllable node of said building automation system is to perform in response to a respective control command from the device (201);
wherein said data (305, 306, 307) comprises one or more of the following: data for selecting a lighting scene, data for selecting light intensity, data for selecting colour temperature of light, data for selecting colour of light.

2. A device (201) according to claim 1, wherein said command transmission interface (203) conforms to a building automation standard.

3. A device (201) according to any of the preceding claims, wherein said device (201) is configured to make the transmission of said one or more preset downloads in broadcast mode.

4. A device (201) according to any of the preceding claims, wherein said command reception interface is configured to receive said commands through a fascia (202) received in said mechanical interface (204).

5. A device (201) according to any of the preceding claims, wherein said command reception interface is configured to receive said commands wirelessly.

6. A device (201) according to any of the preceding claims, wherein said command reception interface comprises a user-actuatable switch (210) at an outer surface of said device (201).

7. A device (201) according to claim 6, wherein the device (201) is configured to respond to a command received through said user-actuatable switch (210) by transmitting - through said command transmission interface (203) - one or more preset downloads containing only data read from a memory (302) within said device (201).

8. A device (201) according to any of the preceding claims, wherein said device is configured to allow, for a limited period of time after power-up, opening a control session with a request message directed to said device (201) and containing a default passcode.

9. A device (201) according to any of the preceding claims, wherein said device is configured to allow opening a control session with a request message directed to said device (201), so that actions allowable during said control session depend on the passcode contained in said request message.

10. A device (201) according to any of claims 8 or 9, wherein said device (201) is configured to receive said request messages through a wireless part (209) of said command reception interface.

11. A system for controlling a building automation system, the system comprising:
- a device (201) according to any of claims 1 to 10, and
- a fascia (202) comprising mechanical and electrical interfaces compatible with the mechanical and electrical interfaces of the device (201) respectively, wherein the fascia (202) comprises a memory (207, 303) programmed with data (305, 306, 307) indicating specific functions for the controlling of which said fascia (202) contains user-actuatable input means (205),
wherein said data (305, 306, 307) comprises one or more of the following: data for selecting a lighting scene, data for selecting light intensity, data for selecting colour temperature of light, data for selecting colour of light.

12. A method for controlling a building automation system, the method comprising the steps of:
- receiving a download command in a device (201);
- as a response to said download command, transmitting (509, 703) by the device, to one or more controllable nodes of said building automation system, one or more preset downloads containing data, wherein said data is received from a fascia (202) that was previously received in a mechanical interface (204) of the device (201), such data indicating specific functions for the controlling of which said fascia (202) contains user-actuatable input means (205),
wherein a preset download defines a respective action that a controllable node of said building automation system is to perform in response to a respective control command from the device (201), and
wherein said data comprises one or more of the following: data for selecting a lighting scene, data for selecting light intensity, data for selecting colour temperature of light, data for selecting colour of light.

13. A computer program comprising instructions which, when the program is executed by a computer, cause the computer to carry out all the steps of the method according to claim 12.

## Patentansprüche

1. Vorrichtung (201) zum Steuern eines Gebäudeautomationssystems, wobei die Vorrichtung Folgendes umfasst:
- eine Befehlsempfangsschnittstelle zum Empfangen von Befehlen von einem Benutzer,
- eine Befehlsübertragungsschnittstelle (203) zum Übertragen von Steuerbefehlen an einen oder mehrere steuerbare Knoten des Gebäudeautomationssystems und
- eine mechanische Schnittstelle (204) zum Aufnehmen einer Blende (202);
- eine elektrische Schnittstelle (208) zum Empfangen gespeicherter Daten von einer Blende (202), die in der mechanischen Schnittstelle (204) aufgenommen ist, und
- die Vorrichtung (201) ist dazu ausgestaltet, auf einen Download-Befehl zu reagieren, der von einem Benutzer durch Übertragen - über die Befehlsübertragungsschnittstelle (203) - eines oder mehrerer voreingestellter Downloads, die Daten enthalten, die von der Blende (202) über die elektrische Schnittstelle (208) empfangen wurden, empfangen wird, wobei ein voreingestellter Download eine jeweilige Aktion definiert, die ein steuerbarer Knoten des Gebäudeautomationssystems als Reaktion auf einen jeweiligen Steuerbefehl von der Vorrichtung (201) durchführen soll;
wobei die Daten (305, 306, 307) eines oder mehrere von Folgendem umfassen: Daten zum Auswählen einer Lichtszene, Daten zum Auswählen einer Lichtintensität, Daten zum Auswählen einer Farbtemperatur von Licht, Daten zum Auswählen einer Farbe von Licht.

2. Vorrichtung (201) nach Anspruch 1, wobei die Befehlsübertragungsschnittstelle (203) einem Gebäudeautomationsstandard entspricht.

3. Vorrichtung (201) nach einem der vorhergehenden Ansprüche, wobei die Vorrichtung (201) dazu ausgestaltet ist, die Übertragung des einen oder der mehreren voreingestellten Downloads im Broadcast-Modus auszuführen.

4. Vorrichtung (201) nach einem der vorhergehenden Ansprüche, wobei die Befehlsempfangsschnittstelle dazu ausgestaltet ist, die Befehle durch eine Blende (202) zu empfangen, die in der mechanischen Schnittstelle (204) aufgenommen ist.

5. Vorrichtung (201) nach einem der vorhergehenden Ansprüche, wobei die Befehlsempfangsschnittstelle dazu ausgestaltet ist, die Befehle drahtlos zu empfangen.

6. Vorrichtung (201) nach einem der vorhergehenden Ansprüche, wobei die Befehlsempfangsschnittstelle einen von einem Benutzer betätigbaren Schalter (210) an einer Außenfläche der Vorrichtung (201) umfasst.

7. Vorrichtung (201) nach Anspruch 6, wobei die Vorrichtung (201) dazu ausgestaltet ist, auf einen Befehl zu reagieren, der durch den von einem Benutzer betätigbaren Schalter (210) durch Übertragen - über die Befehlsübertragungsschnittstelle (203) - eines oder mehrerer voreingestellter Downloads, die nur Daten enthalten, die aus einem Speicher (302) in der Vorrichtung (201) ausgelesen wurden, empfangen wird.

8. Vorrichtung (201) nach einem der vorhergehenden Ansprüche, wobei die Vorrichtung dazu ausgestaltet ist, für einen begrenzten Zeitraum nach einem Einschalten ein Öffnen einer Steuersitzung mit einer an die Vorrichtung (201) gerichteten und einen Standard-Passcode enthaltenden Anforderungsnachricht zuzulassen.

9. Vorrichtung (201) nach einem der vorhergehenden Ansprüche, wobei die Vorrichtung dazu ausgestaltet ist, ein Öffnen einer Steuersitzung mit einer an die Vorrichtung (201) gerichteten Anforderungsnachricht derart zuzulassen, dass Aktionen, die während der Steuersitzung zulässig sind, von dem in der Anforderungsnachricht enthaltenen Passcode abhängen.

10. Vorrichtung (201) nach einem der Ansprüche 8 oder 9, wobei die Vorrichtung (201) dazu ausgestaltet ist, die Anforderungsnachrichten über einen drahtlosen Teil (209) der Befehlsempfangsschnittstelle zu empfangen.

11. System zum Steuern eines Gebäudeautomationssystems, wobei das System Folgendes umfasst:
- eine Vorrichtung (201) nach einem der Ansprüche 1 bis 10, und
- eine Blende (202), die mechanische und elektrische Schnittstellen umfasst, die mit den mechanischen bzw. elektrischen Schnittstellen der Vorrichtung (201) kompatibel sind, wobei die Blende (202) einen Speicher (207, 303) umfasst, der mit Daten (305, 306, 307) programmiert ist, die konkrete Funktionen für die Steuerung angeben, für welche die Blende (202) von einem Benutzer betätigbare Eingabemittel (205) enthält,
wobei die Daten (305, 306, 307) eines oder mehrere von Folgendem umfassen: Daten zum Auswählen einer Lichtszene, Daten zum Auswählen einer Lichtintensität, Daten zum Auswählen einer Farbtemperatur von Licht, Daten zum Auswählen einer Farbe von Licht.

12. Verfahren zum Steuern eines Gebäudeautomationssystems, wobei das Verfahren die folgenden Schritte umfasst:
- Empfangen eines Download-Befehls in einer Vorrichtung (201);
- als eine Reaktion auf den Download-Befehl, Übertragen (509, 703) eines oder mehrerer voreingestellter Downloads, die Daten enthalten, an einen oder mehrere steuerbare Knoten des Gebäudeautomationssystems durch die Vorrichtung, wobei Daten von einer Blende (202) empfangen werden, die zuvor in einer mechanischen Schnittstelle (204) der Vorrichtung (201) aufgenommen wurde, wobei solche Daten konkrete Funktionen für die Steuerung angeben, für welche die Blende (202) von einem Benutzer betätigbare Eingabemittel (205) enthält,
wobei ein voreingestellter Download eine jeweilige Aktion definiert, die ein steuerbarer Knoten des Gebäudeautomationssystems als Reaktion auf einen jeweiligen Steuerbefehl von der Vorrichtung (201) durchführen soll, und
wobei die Daten eines oder mehrere von Folgendem umfassen:
Daten zum Auswählen einer Lichtszene, Daten zum Auswählen einer Lichtintensität, Daten zum Auswählen einer Farbtemperatur von Licht, Daten zum Auswählen einer Farbe von Licht.

13. Computerprogramm, umfassend Anweisungen, die, wenn das Programm von einem Computer ausgeführt wird, den Computer veranlassen, alle Schritte des Verfahrens nach Anspruch 12 durchzuführen.

## Revendications

1. Dispositif (201) destiné à contrôler un système d'immotique, le dispositif comprenant :
- une interface de réception de commandes destinée à recevoir des commandes d'un utilisateur,
- une interface de transmission de commandes (203) destinée à transmettre des commandes de contrôle à un ou plusieurs nœuds contrôlables dudit système d'immotique, et
- une interface mécanique (204) destinée à recevoir un fascia (202) ;
- une interface électrique (208) destinée à recevoir des données stockées provenant d'un fascia (202) reçues dans ladite interface mécanique (204), et
- ledit dispositif (201) est configuré pour répondre à une commande de téléchargement provenant de l'utilisateur en transmettant, via ladite interface de transmission de commandes (203), un ou plusieurs téléchargements prédéfinis contenant des données reçues dudit fascia (202) via ladite interface électrique (208), dans lequel un téléchargement prédéfini définit une action respective qu'un nœud contrôlable dudit système d'immotique doit réaliser en réponse à une commande de contrôle respective du dispositif (201) ;
dans lequel lesdites données (305, 306, 307) comprennent un ou plusieurs des éléments suivants : des données pour sélectionner une scène d'éclairage, des données pour sélectionner l'intensité lumineuse, des données pour sélectionner la température de couleur de la lumière, des données pour sélectionner la couleur de la lumière.

2. Dispositif (201) selon la revendication 1, dans lequel ladite interface de transmission de commandes (203) est conforme à une norme d'immotique.

3. Dispositif (201) selon l'une quelconque des revendications précédentes, dans lequel ledit dispositif (201) est configuré pour effectuer la transmission desdits un ou plusieurs téléchargements prédéfinis en mode de diffusion.

4. Dispositif (201) selon l'une quelconque des revendications précédentes, dans lequel ladite interface de réception de commandes est configurée pour recevoir lesdites commandes via un fascia (202) reçu dans ladite interface mécanique (204).

5. Dispositif (201) selon l'une quelconque des revendications précédentes, dans lequel ladite interface de réception de commandes est configurée pour recevoir lesdites commandes sans fil.

6. Dispositif (201) selon l'une quelconque des revendications précédentes, dans lequel ladite interface de réception de commandes comprend un commutateur actionnable par l'utilisateur (210) sur une surface extérieure dudit dispositif (201).

7. Dispositif (201) selon la revendication 6, dans lequel le dispositif (201) est configuré pour répondre à une commande reçue via ledit commutateur actionnable par l'utilisateur (210) en transmettant, via ladite interface de transmission de commandes (203), un ou plusieurs téléchargements prédéfinis ne contenant que des données lues dans une mémoire (302) à l'intérieur dudit dispositif (201).

8. Dispositif (201) selon l'une quelconque des revendications précédentes, dans lequel ledit dispositif est configuré pour permettre, pendant une période de temps limitée après la mise sous tension, l'ouverture d'une session de contrôle avec un message de demande dirigé vers ledit dispositif (201) et contenant un mot de passe par défaut.

9. Dispositif (201) selon l'une quelconque des revendications précédentes, dans lequel ledit dispositif est configuré pour permettre l'ouverture d'une session de contrôle avec un message de demande dirigé vers ledit dispositif (201), de sorte que les actions autorisées pendant ladite session de contrôle dépendent du code d'accès contenu dans ledit message de demande.

10. Dispositif (201) selon l'une quelconque des revendications 8 ou 9, dans lequel ledit dispositif (201) est configuré pour recevoir lesdits messages de demande via une partie sans fil (209) de ladite interface de réception de commande.

11. Système destiné à contrôler un système d'immotique, le système comprenant :
- un dispositif (201) selon l'une quelconque des revendications 1 à 10, et
- un fascia (202) comprenant des interfaces mécaniques et électriques compatibles avec les interfaces mécaniques et électriques du dispositif (201) respectivement, dans lequel le fascia (202) comprend une mémoire (207, 303) programmée avec des données (305, 306, 307) indiquant des fonctions spécifiques pour la commande desquelles ledit fascia (202) contient des moyens de saisie actionnables par l'utilisateur (205),
dans lequel lesdites données (305, 306, 307) comprennent un ou plusieurs des éléments suivants :
des données pour sélectionner une scène d'éclairage, des données pour sélectionner l'intensité lumineuse, des données pour sélectionner la température de couleur de la lumière, des données pour sélectionner la couleur de la lumière.

12. Procédé de contrôle d'un système d'immotique, le procédé comprenant les étapes suivantes :
- la réception d'une commande de téléchargement dans un dispositif (201) ;
- en réponse à ladite commande de téléchargement, la transmission (509, 703) par le dispositif, à un ou plusieurs nœuds contrôlables dudit système d'immotique, d'un ou de plusieurs téléchargements prédéfinis contenant des données, dans lequel lesdites données sont reçues d'un fascia (202) qui a été précédemment reçu dans une interface mécanique (204) du dispositif (201), de telles données indiquant des fonctions spécifiques pour la commande desquelles ledit fascia (202) contient des moyens d'entrée actionnables par l'utilisateur (205),
dans lequel un téléchargement prédéfini définit une action respective qu'un noeud contrôlable dudit système d'immotique doit exécuter en réponse à une commande de contrôle respective du dispositif (201), et
dans lequel lesdites données comprennent un ou plusieurs des éléments suivants : des données pour sélectionner une scène d'éclairage, des données pour sélectionner l'intensité lumineuse, des données pour sélectionner la température de couleur de la lumière, des données pour sélectionner la couleur de la lumière.

13. Programme informatique comprenant des instructions qui, lorsque le programme est exécuté par un ordinateur, amènent l'ordinateur à exécuter toutes les étapes du procédé selon la revendication 12.
